Europäisches Patentamt

European Patent Office

Office européen des brevets

(19)

(11) Veröffentlichungsnummer : **0 068 082**
**B1**

# (12) EUROPÄISCHE PATENTSCHRIFT

(45) Veröffentlichungstag der Patentschrift :
21.11.85

(21) Anmeldenummer : 82102711.7

(22) Anmeldetag : 31.03.82

(51) Int. Cl.⁴ : **G 01 B 21/20, G 01 B 7/28**

(54) **Verfahren zur Messung der Rundheitsabweichungen von Rotationskörpern.**

(30) Priorität : 13.06.81 DE 3123489

(43) Veröffentlichungstag der Anmeldung :
05.01.83 Patentblatt 83/01

(45) Bekanntmachung des Hinweises auf die Patenterteilung : 21.11.85 Patentblatt 85/47

(84) Benannte Vertragsstaaten :
AT CH FR GB IT LI NL SE

(56) Entgegenhaltungen :
US-A- 3 136 069
US-A- 3 222 791
US-A- 3 231 979
US-A- 3 400 463
JOURNAL OF PHYSICS E SCIENTIFIC INSTRU-
MENTS, Band 9, Nr. 7, Juli 1976, Seiten 537-544,
London, G.B. D.G. CHETWYND et al.: "improving the
accuracy of roundness measurement"
Feinwerktechnik und Messtechnik 87 (1979) 5, Seiten
227-232

(73) Patentinhaber : Dr. Johannes Heidenhain GmbH
Nansenstrasse 17
D-8225 Traunreut (DE)

(72) Erfinder : Ernst, Alfons, Dipl.-Ing.
Traunring 62
D-8225 Traunreut (DE)
Erfinder : Spies, Alfons, Dipl.-Ing.
Wopfnerstrasse
D-8221 Seebruck (DE)

**Beschreibung**

Die Erfindung geht von einem Verfahren zur Bestimmung der Rundheitsabweichungen eines Rotationskörpers gemäß dem Oberbegriff des Anspruches 1 entsprechend der DE-A-24 25 226 aus.

Aus der Druckschrift « Feinwerktechnik und Meßtechnik » 87 (1979) 5, Seiten 227-232 ist eine Polarkoordinatenmeßmaschine zur Ermittlung der Polarkoordinaten von Kurvenscheiben mittels einer digitalen Abtasteinrichtung bekannt, bei der ein Digitalrechner die Differenz zwischen vorgegebenen Radiussollwerten und gemessenen Radiusistwerten ermittelt. Die Exzentrizität der Kurvenscheibe bezüglich einer Drehachse wird durch Messen der Lage einer Bezugsbohrung in der Kurvenscheibe auf die Sollkoordinatenwerte umgerechnet oder die Kurvenscheibe wird bezüglich der Drehachse mittels einer x-y-Verstellung zentriert, indem aus den vier Radien der Bezugsbohrung in den x-y-Richtungen die Sollradien in diesen beiden Richtungen ermittelt werden.

In der DE-A-24 59 678 ist eine Einrichtung zum Messen der Rundheit eines Werkstücks beschrieben, bei der das analoge Ausgangssignal eines Detektors zum Fühlen der Werkstückgröße, welches aus der Summe eines exzentrizitätsbedingten Signals und eines rundungsfehlerbedingten Signals besteht, einmal über eine Einrichtung zur Absolutwertermittlung und zum anderen über ein Tiefpaßfilter und eine weitere Einrichtung zur Absolutwertermittlung einer Recheneinrichtung zugeleitet wird, an deren Ausgang der Absolutwert des Rundungsfehlers erscheint, der in einer Anzeigeeinrichtung in analoger oder digitaler Form angezeigt werden kann.

Die US-A-3 231 979 beschreibt ein Verfahren zum Prüfen der Oberflächengestalt eines Rotationskörpers mittels eines analogen Längenmeßtasters, der eine elektrische Gesamtmeßgröße erzeugt, die dem Oberflächenprofil und dem Zentrierfehler entspricht ; zusätzlich wird eine elektrische sinusförmige Berichtigungsgröße erzeugt, die dem Zentrierfehler entspricht. Die Gesamtmeßgröße und die Berichtigungsgröße werden einem differenzbildenen Meßinstrument zur Differenzbildung zugeführt.

In der Zeitschrift « Journal of Physics and Scientific Instruments », Band 9, Nr. 7, Juli 1976, S. 537-544 ist eine Einrichtung zur Ermittlung der Rundheitsabweichungen eines Rotationskörpers beschrieben, dessen Oberflächenprofil von einer analogen Abtasteinrichtung abgetastet wird. Eine Trennung von Spindelfehlern und Profilfehlern wird in Verbindung mit einer Kompensation der Exzentrizität mittels eines Rechners durchgeführt.

In der DE-A-24 25 226 ist ein Verfahren zum Ausmessen der Oberfläche eines Werkstücks angegeben, bei dem ein Fühler in einer Traverse über die Oberfläche geführt wird, um für das Profil der Oberfläche charakteristische Analogsignale zu liefern, die von einem Analog-Digital-Wandler umgesetzt und einem Digitalrechner zugeführt werden. Aus diesen Digitalwerten und aus digitalen Signalen, die die relative Winkellage zwischen dem Fühler und dem Werkstück darstellen, werden Parameter für eine Bezugslinie ermittelt, die in der Mitte des abgetasteten Werkstücks zentriert ist und auf die Rundheitsabweichungen der Oberfläche des Werkstücks bezogen werden können. Bei der Berechnung der Bezugslinie wird von einer Gleichung für einen exzentrischen Kreis ausgegangen, die nur das Exzentrizitätsglied erster Ordnung enthält.

Bei den Meßeinrichtungen mit analogen meßwertaufnehmern besitzen diese wegen des hohen Auflösungsvermögens zur Ermittlung der Rundheitsabweichungen nur einen begrenzten Meßbereich. Daher muß die Zentrierung des zu prüfenden Werkstücks bezüglich der Drehachse einer Meßspindel möglichst genau sein ; dieser Zentrierungsvorgang ist schwierig, zeit- und kostenaufwendig und erfordert den Einsatz von geschultem Personal.

Der Erfindung liegt die Aufgabe zugrunde, ein Verfahren zur Bestimmung der Rundheitsabweichungen eines Rotationskörpers der oben genannten Gattung anzugeben, das mit einfachen Mitteln eine hochgenaue Ermittlung der Rundheitsabweichungen des Rotationskörpers auch ohne genaue Zentrierung bezüglich der Drehachse ermöglicht.

Diese Aufgabe wird bei einem Verfahren die eingangs genannten Art erfindungsgemäß durch die kennzeichnenden Merkmale des Anspruchs 1 gelöst.

Die mit der Erfindung erzielten Vorteile bestehen insbesondere darin, daß der Rotationskörper relativ stark exzentrisch zur Drehachse angeordnet sein kann, do daß sich eine Zeit- und kostenaufwendige genaue Zentrierung erübrigt. Alle wichtigen Daten wie Größe und Winkellage der Rundheitsabweichungen und der Exzentrizität, elliptischer Fehler, Dreiecksfehler sowie weitere Fourier-Koeffizienten der Rundheitsabweichungen und die Konzentrizität mehrerer Rotationsflächen eines Rotationskörpers können durch den Rechner ermittelt werden. Des weiteren kann nach einem einmaligen Eichvorgang mit einem Lehrzylinder das Absolutmaß des Radius des Rotationskörpers angegeben werden. Obige Vorteile werden hauptsächlich durch das erfindungsgemäße Vorsehen einer digitalen elektrischen Abtasteinrichtung (inkrementaler oder absoluter Meßtaster) ermöglicht.

Weitere vorteilhafte Ausgestaltungen des Verfahrens entnimmt man den Unteransprüchen.

Ausführungsbeispiele der Erfindung werden anhand der Zeichnung näher beschrieben.

Es zeigen

Figur 1  eine schematische Darstellung einer Rundheitsmeßeinrichtung ;

Figur 2  eine Schaltungsanordnung zur Auswertung der Meßwerte der Meßeinrichtung nach Figur 1 ;

Figur 3 ein Diagramm eines kreisförmigen Rotationskörpers, dessen Mittelpunkt gegenüber einer Drehachse exzentrisch verschoben ist ;

Figur 4 ein Diagramm des scheinbaren elliptischen Fehlers als Funktion der Exzentrizität ;

Figur 5 ein weiteres Diagramm des scheinbaren elliptischen Fehlers als Funktion der Exzentrizität ;

Figur 6 ein Diagramm der Exzentrizität als Funktion des Radius des Rotationskörpers und

Figur 7 ein Diagramm eines zu prüfenden, exzentrisch angeordneten Rotationskörpers.

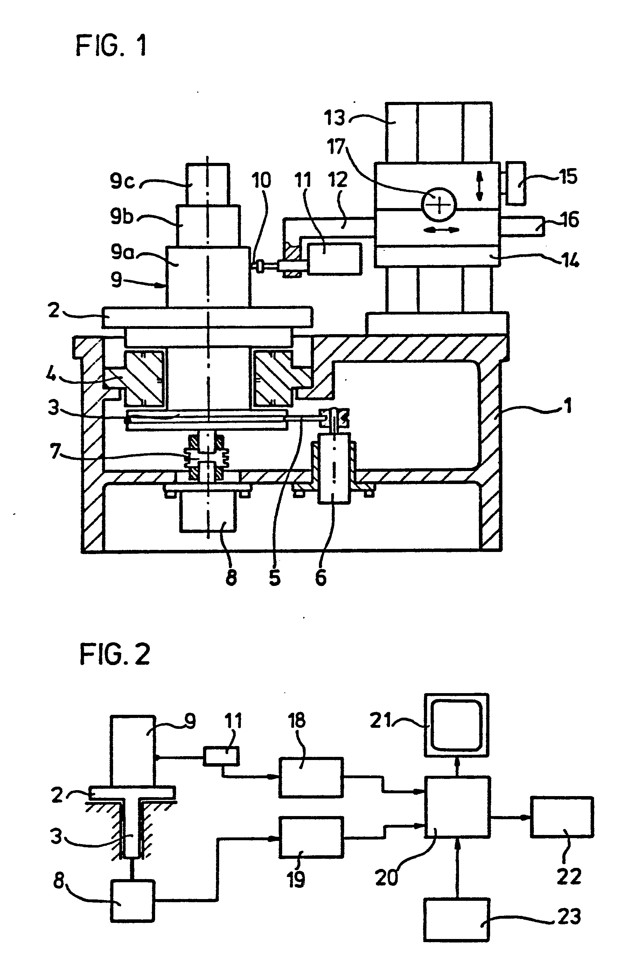

In Figur 1 ist eine Einrichtung zur Messung der Rundheitsabweichungen von Rotationskörpern schematisch dargestellt. In einem ortsfesten Rahmen 1 ist ein Rundtisch 2 mit einer Spindel 3 in einem Präzisionslager 4 drehbar gelagert. Die Spindel 3 wird mittels eines Riemens 5 von einem im Rahmen 1 befestigten Motor 6 angetrieben. Zur Ermittlung der Winkellage des Rundtisches 2 ist die Spindel 3 über eine Kupplung 7 mit einer Winkelmeßeinrichtung 8 starr verbunden. Auf der Oberfläche des Rundtisches 2 ist ein Rotationskörper 9 mit drei Rotationsflächen 9a, 9b, 9c angeordnet.

Die Rotationsflächen 9a, 9b, 9c des rotierenden Rotationskörpers 9 werden erfindungsgemäß vom Abtastkopf 10 einer digitalen Abtasteinrichtung 11 abgetastet, die von einem Arm 12 getragen wird. Auf dem Rahmen 1 ist eine senkrechte Säule 13 mit einem Vertikalschlitten 14 befestigt, der mittels einer Verstellschraube 15 höhenverstellbar ist. Im Vertikalschlitten 14 ist ein Horizontalschlitten 16 angeordnet, der mit dem Arm 12 verbunden und mittels einer Verstellschraube 17 horizontal verstellbar ist.

In Figur 2 ist die Meßeinrichtung nach Figur 1 mit dem Rundtisch 2, der Spindel 3, der Winkelmeßeinrichtung 8, dem Rotationskörper 9 und der Abtasteinrichtung 11 vereinfacht dargestellt. Die digitalen Ausgangssignale der Abtasteinrichtung 11 werden über einen Vorwärts-/Rückwärtszähler 18 und die digitalen Ausgangssignale der Winkelmeßeinrichtung 8 über einen Vorwärts-/Rückwärtszähler 19 einem Digitalrechner 20 zugeleitet, der mit einer Anzeigeeinheit 21 und einer Druckeinrichtung 22 verbunden und von einer alphanumerischen Eingabeeinheit 23 beaufschlagt ist.

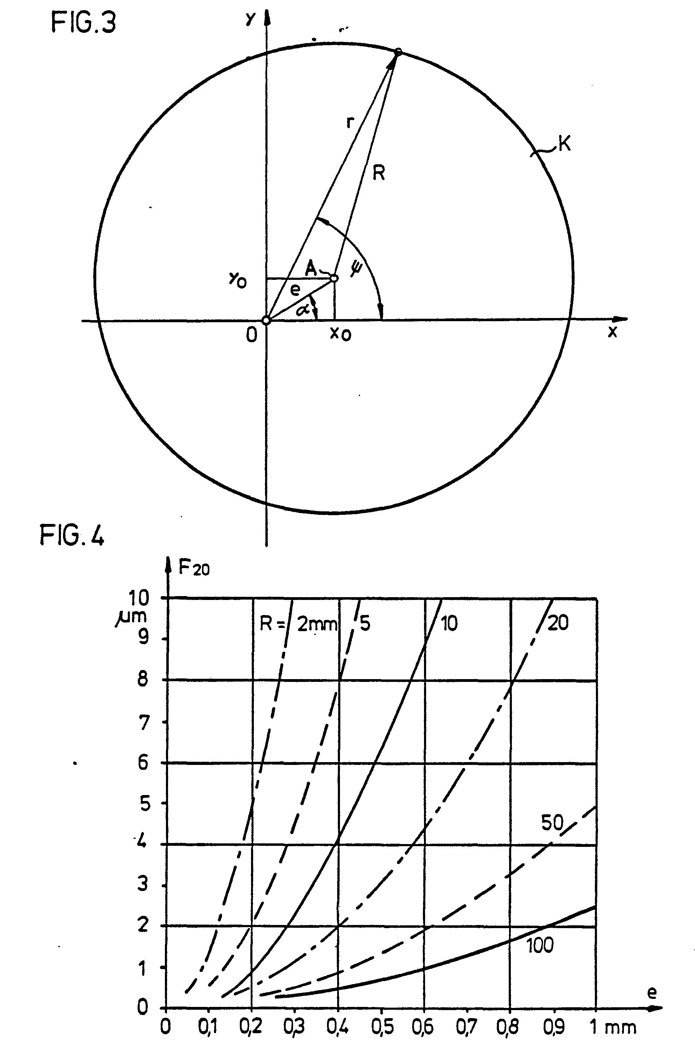

In Figur 3 ist ein kreisförmiger Rotationskörper K mit dem Radius R dargestellt, dessen Mittelpunkt A gegenüber einer Drehachse 0 um eine Exzentrizität e verschoben ist. Die Drehachse 0 möge sich im Ursprung eines Koordinatensystems y, x, befinden, so daß der Mittelpunkt A des Rotationskörpers K die Koordinaten $x_0$, $y_0$ aufweist. Die Exzentrizität e schließt mit der x-Achse den Winkel $\alpha$ und der Momentanstrahl r mit der x-Achse den Winkel $\psi$ ein.

Aus Figur 3 ergibt sich für den Momentanstrahl r in Abhängigkeit vom Winkel $\psi$ aus der Gleichung

$$R^2 = e^2 + r^2 - 2\,er\cos(\psi - \alpha)$$

die Beziehung

$$r(\psi) = e\cos(\psi - \alpha) + \sqrt{R^2 - e^2 \sin^2(4 - \alpha)}$$

und nach Entwicklung in eine Fourier-Reihe

$$r(\psi) = R - e^2/4\,R + e\cos(\psi - \alpha) + (e^2/4\,R) \cdot \cos 2(\psi - \alpha) - (e^4/8\,R^3)\sin^4(\psi - \alpha)\ \dots$$

$$r(\psi) = F_0 + F_1 + F_2 - F_3 \dots$$

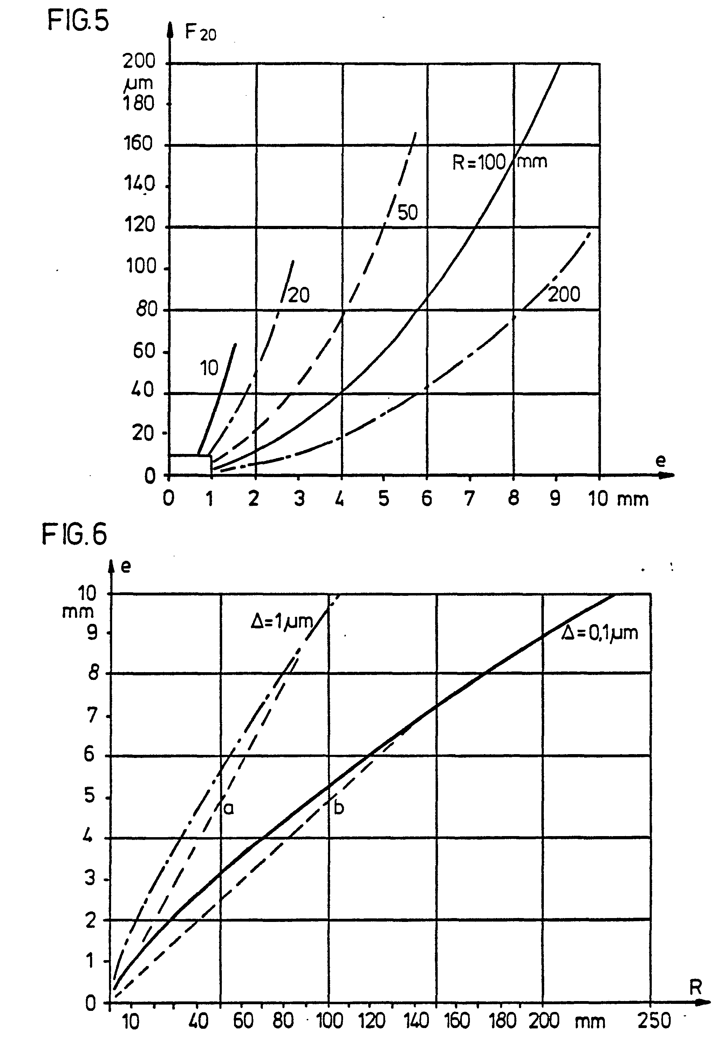

Durch den Term $F_2 = F_{20} \cdot \cos 2(\psi - \alpha)$ mit der Periode $\pi$ zeigt ein in Wirklichkeit kreisrunder Rotationskörper K bei exzentrischer Aufspannung einen scheinbaren elliptischen Fehler. Die Größe des maximalen elliptischen Fehlers $F_{20}$ ist als Diagramm in den Figuren 4 und 5 in Abhängigkeit von der Exzentrizität e und dem Radius R des Rotationskörpers K dargestellt.

In der Fourier-Entwicklung tritt als nächsthöheres Glied ein Term $F_3$ mit dem maximalen Betrag $\Delta = e^4/8R^3$ auf. Im allgemeinen resultieren durch dieses und die folgenden Glieder des Polynoms vernachlässigbar kleine Meßfehler. In Figur 6 ist die Exzentrizität e als Funktion des Radius R des Rotationskörpers K dargestellt. Diesem Diagramm ist zu entnehmen, daß beispielsweise für einen Roationskörper K mit einem Radius R = 50 mm und einer Exzentrizität e = 3 mm der maximale Betrag $\Delta$ kleiner als 0,1 $\mu$m ist. Die gestrichelten Linien a und b in Figur 6 zeigen, daß die zulässige Exzentrizität e überschlägig mit R/10 bzw. R/20 angesetzt werden kann, wenn $\Delta$ kleiner als 1 $\mu$m bzw. kleiner als 0,1 $\mu$m bleiben soll. Da der Term $F_3$ und die folgenden Glieder des Polynoms vernachlässigt werden können, ergibt sich für den Momentanstrahl r in Abhängigkeit von Winkel $\psi$

$$r(\psi) = R - e^2/4\,R + e\cos(\psi - \alpha) + (e^2/4\,R) \cdot \cos 2(\psi - \alpha)\ .$$

Damit ist gezeigt, daß mit den vorgeschlagenen Maßnahmen des visuellen groben Zentrierens des Rotationskörpers 9 bezüglich der Drehachse 0 innerhalb der oben angegebenen Grenzen für die Exzentrizität e, der Verwendung einer Abtasteinrichtung 11 mit großem Meßbereich zur Ermittlung der Rundheitsabweichungen des Rotationskörpers 9 und der Elimination der Exzentrizität e und des elliptischen Fehlers $F_2$ unter Hinzuziehung des Digitalrechners 20 sehr genaue Rundheitsmessungen

3

vorgenommen werden können. Darüberhinaus können gegebenenfalls die oben angegebenen Grenzen für die Exzentrizität e erweitert werden, wenn erfindungsgemäß die nachfolgenden Glieder der Fourier-Entwicklung eliminiert werden.

Zur Messung der Rundheitsabweichungen des Rotationskörpers 9 wird von der digitalen Abtasteinrichtung 11 der Meßwert M in Abhängigkeit von Winkel $\psi$

$$M(\psi) = M_0 + e \cos (\psi - \alpha) + (e^2/4 \, R) \cos 2(\psi - \alpha) + F$$

ermittelt, wobei

$M_0$ willkürlich durch den Anfangswert bestimmt wird und
F die Rundheitsabweichung des Rotationskörpers 9 bedeutet.

Die einzelnen Meßwerte $M_i$ werden regelmäßig über den Winkel $2\pi$ verteilt ermittelt. Hierfür werden von der Winkelmeßeinrichtung 8 n Meßpositionen über den Winkel $2\pi$ definiert. Die Zahl n muß so groß gewählt werden, daß das Profil der zu prüfenden Rotationsfläche 9a, 9b, 9c des Rotationskörpers 9 mit genügender Sicherheit ermittelt werden kann. Nach oben hin ist die Zahl n durch die Speicherkapazität des Digitalrechners 20 begrenzt. Die Zahl n der Meßpositionen wird zwischen 200 und 10 000 liegen. 200 Meßwerte sind für die Ermittlung der Rundheitsabweichungen des Rotationskörpers (9) als Minimum anzusehen. Einige 1 000 Meßwerte sind heute in einem Digitalrechner mit vertretbarer Speichergröße in ausreichend kurzer Zeit zu verarbeiten.

Im Digitalrechner 20 wird zur Ermittlung der Werte $M_0$, $x_0$ und $y_0$ ($x_0$ und $y_0$ sind die Koordinaten des Mittelpunktes A des Rotationskörpers 9 bezüglich der Drehachse 0) folgende Auswertung vorgenommen :

$$\sum_n M_i = n \cdot M_0 \qquad \rightarrow M_0 = (1/n) \sum_n M_i$$

$$\sum_n M_i \cos \psi_i = (n/2) \, x_0 \rightarrow x_0 = (2/n) \sum_n M_i \cos \psi_i$$

$$\sum_n M_i \sin \psi_i = (n/2) \, y_0 \rightarrow y_0 = (2/n) \sum_n M_i \sin \psi_i$$

Daraus läßt sich die Exzentrizität e

$$e = \sqrt{x_0^2 + y_0^2}$$

und der Winkel

$$\alpha = \arctan y_0/x_0$$

berechnen.

Damit läßt sich die Rundheitsabweichung F des Rotationskörpers 9

$$F = M - M_0 - e \cos (\psi - \alpha) - (e^2/4 \, R) \cos 2(\psi - \alpha)$$

bestimmen, wobei M aus der Messung und $M_0$, e, $\alpha$, durch Rechnung erhalten werden ; R wird auf der Eingabeeinheit 23, die den Digitalrechner 20 beaufschlagt, mittels alphanumerischer Tasten oder mittels Dekadenschalter eingegeben.

Zur Ermittlung des absoluten Radius R des Rotationskörpers 9 wird die Rundheitsmeßeinrichtung mit Hilfe eines Eichzylinders mit bekannten Radius $R_E$ und unter Durchführung einer Rundheitsmessung und Bestimmung der Werte $M_0 = M_{0E}$ und $e^2/4R_E$ geeicht. Daraus errechnet sich ein Korrekturwert E

$$E = M_{0E} + e^2/4 \, R_E - R_E \, ,$$

der zur Berechnung des absoluten Radius R des Rotationskörpers 9

$$R = M_0 + e^2/4 \, R - E$$

herangezogen wird.

Der Digitalrechner 20 dient zur Speicherung der Meßwerte, zur Elimination der Exzentrizität e und des scheinbaren elliptischen Fehlers $F_2$ sowie gegebenenfalls der Fehler höherer Ordnung zur Berechnung der Rundheitsabweichungen und zur Fourier-Analyse der Rundheitsabweichungen sowie gegebenenfalls zur statistischen Auswertung einer Reihe von Rundheitsmessungen ; des weiteren kann die Konzentrizität mehrerer Rotationsflächen 9a, 9b, 9c des Rotationskörpers 9 bzw. die Schräglage der Rotationsachse des Rotationskörpers 9 bezüglich der Auflagefläche ermittelt werden.

Das Meßergebnis kann auf der Druckeinrichtung 22 in Form eines X-Y-Schreibers oder eines Polarschreibers oder auf einer Anzeigeeinrichtung 21 mit einem Bildschirm in Form eines polaren Rundheitsfehlerdiagramms dargestellt werden.

4

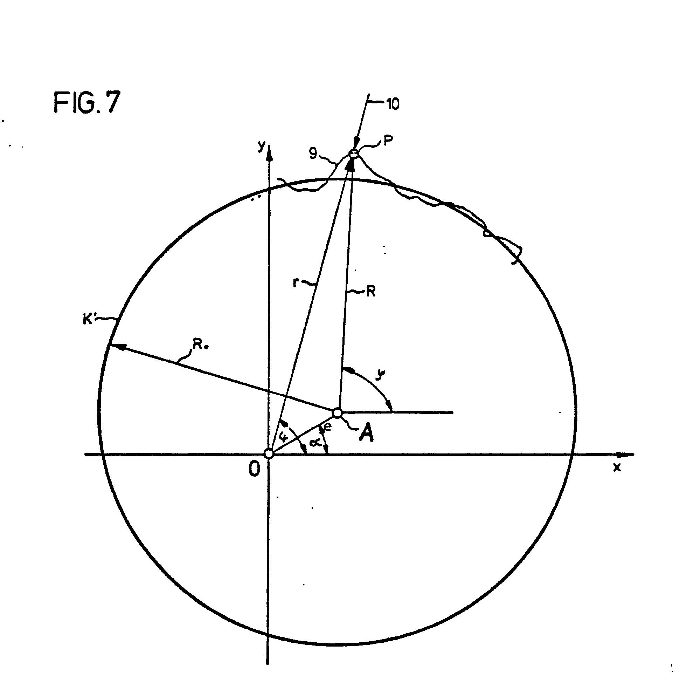

In einer weiteren Ausbildung der Erfindung wird vorgeschlagen, die Parameter $R_0$, e, $\alpha$ eines an die Profilform des Rotationskörpers 9 bestangepaßten Kreises K' mit den bekannten Verfahren der Ausgleichsrechnung zu ermitteln, wobei $R_0$ der Radius des Kreises K', e die Exzentrizität und $\alpha$ der Winkel zwischen der Richtung der Exzentrizität e und der Richtung x eines vorgegebenen Koordinatensystems x, y bedeuten (Figur 7). Die auf diesen Kreis K' bezogene Rundheitsabweichung $F = R - R_0$ des Rotationskörpers 9 kann dann exakt nach der Gleichung

$$F(\psi) = R - R_0 = \sqrt{r^2 + e^2 - 2\,er\cos(\psi - \alpha)} - R_0$$

berechnet werden. Die auf die Drehachse 0 bezogene Rundheitsabweichung $F(\psi)$ kann mit der Beziehung

$$\tan \varphi = (r \sin \psi - e \sin \alpha)/(r \cos \psi - e \cos \alpha)$$

auf die auf den Punkt A bezogene Rundheitsabweichung $F(\varphi)$ umgerechnet werden. Auf diese Weise erhält man ein unverzerrtes Diagramm der Rundheitsabweichungen $F(\varphi)$ des Rotationskörpers 9 unabhängig von der Exzentrizität e.

**Patentansprüche**

1. Verfahren zur Bestimmung der Rundheitsabweichungen eines Rotationskörpers (9), bei dem der Rotationskörper (9) bezüglich einer Drehachse (0) mit einer bestimmten Exzentrizität (e) seines Mittelpunkts (A) angeordnet und relativ zu einer Abtasteinrichtung (11) gedreht wird, wobei der Drehwinkel zwischen dem Rotationskörper (9) und der Abtasteinrichtung (11) erfaßt wird, bei dem das Oberflächenprofil des Rotationskörpers (9) von der Abtasteinrichtung (11) abgetastet und der Abstand dieses Oberflächenprofils von der Drehachse (0) gemessen wird, und bei dem die gemessenen Drehwinkel- und Abstandswerte einem Digitalrechner (20) zur Ermittlung der Rundheitsabweichungen zugeführt werden, wobei die Rundheitsermittlung unter Berücksichtigung der durch die Exzentrizität (e) verursachten Fehler erster Ordnung erfolgt, gekennzeichnet durch folgende Verfahrensschritte :
   a) als Abtasteinrichtung (11) wird ein digitaler inkrementaler oder absoluter Meßtaster eingesetzt ;
   b) der Rotationskörper (9) wird bezüglich der Drehachse (0) im Meßbereich des Meßtasters (11) visuell groß zentriert ;
   c) bei der Rundheitsermittlung werden vom Digitalrechner (20) der durch die Exzentrizität (e) verursachte scheinbare elliptische Fehler und — fakultativ — Fehler höherer Ordnung berücksichtigt.

2. Verfahren nach Anspruch 1, gekennzeichnet durch folgende Verfahrensschritte :
   a) der absolute Radius (R) des Rotationskörpers (9) wird durch eine Eingabeeinheit (23) in den Digitalrechner (20) eingegeben oder der digitale Meßtaster (11) wird durch einen vorangehenden Eichvorgang so geeicht, daß im Digitalrechner (20) der absolute Wert des Abstandes des Oberflächenprofils von der Drehachse (0) gebildet wird ;
   b) die Parameter (e, $\alpha$ und gegebenenfalls $R_0$) eines dem Rotationskörper (9) bestangepaßten Kreises (K') werden nach bekannten Methoden der Ausgleichsrechnung vom Digitalrechner (20) ermittelt ;
   c) die Rundheitsabweichung (F) wird als Funktion einer rotationskörperbezogenen Koordinate ($\varphi$) vom Digitalrechner (20) errechnet und ausgegeben.

3. Verfahren nach Anspruch 1, gekennzeichnet durch folgende Verfahrensschritte :
   a) der absolute Radius (R) des Rotationskörpers (9) wird durch eine Eingabeeinheit (23) in den Digitalrechner (20) eingegeben oder der digitale Meßtaster (11) wird durch einen vorangehenden Eichvorgang so geeicht, daß im Digitalrechner (20) der absolute Wert des Abstandes des Oberflächenprofils von der Drehachse (0) gebildet wird ;
   b) die Parameter (e, $\alpha$ und gegebenenfalls $R_0$) eines dem Rotationskörper (9) bestangepaßten Kreises (K') werden vom Digitalrechner (20) nach folgenden bekannten vereinfachten Gleichungen der Ausgleichsrechnung ermittelt :

$$x_0 = (2/n) \sum_n M_i \cos \psi_i \,;$$

$$y_0 = (2/n) \sum_n M_i \sin \psi_i \,;$$

$$e = \sqrt{x_0^2 + y_0^2} \,;$$

$$\alpha = \arctan y_0/x_0 \,;$$

wobei
   $M_i$ die einzelnen Meßwerte der Abtasteinrichtung (11),
   n die Anzahl der Meßwerte $M_i$ über den Winkel $2\pi$,
   $\psi_i$ die den Meßwerten $M_i$ zugeordneten Winkellagen bezüglich der Koordinate x eines Koordinatensystems x, y durch den Drehpunkt (0),

5

$x_0$, $y_0$ die Koordinaten des Mittelpunktes (A) des Rotationskörpers (9),

$\alpha$ der Winkel zwischen der Richtung der Exzentrizität (e) und der Koordinate x des Koordinatensystems x, y und

$R_0$ der Radius des bestangepaßten Kreises (K') bedeuten ;

c) die Korrekturwerte des scheinbaren elliptischen Fehlers werden nach der Formel $F_2 = (e^2/4\ R_0)$ cos 2 $(\psi - \alpha)$ ermittelt und vom Meßergebnis subtrahiert ;

d) die Rundheitsabweichung $F_i$ wird mittels des Digitalrechners (20) aus den Meßwerten $M_i$ durch

$$F_i = M_i - M_0 - e\cos(\psi_i - \alpha) - (e^2/4\ R_0)\cos 2(\psi_i - \alpha) \qquad \text{mit}$$

$$M_0 = R_0 - (e^2/4\ R_0) + E \qquad (E = \text{Korrekturwert})$$

errechnet und als Funktion der rotationskörperbezogenen Koordinate $(\varphi_i)$ ausgegeben.

4. Verfahren nach den Ansprüchen 2 und 3, dadurch gekennzeichnet, daß vom Digitalrechner (20) die Konzentrizität mehrerer Rotationsflächen (9a, 9b, 9c) des Rotationskörpers (9) bzw. die Schräglage der Rotationsachse des Rotationskörpers (9) ermittelt werden.

5. Verfahren nach den Ansprüchen 2 und 3, dadurch gekennzeichnet, daß die ermittelten Fehler einer Fourieranalyse unterzogen werden und daß die Fourierkoeffizienten ausgegeben werden.

## Claims

1. Method for determining the deviations from roundness of a rotational solid (9), in which method the rotational solid (9) is arranged to have a certain eccentricity (e) of its centre (A) with respect to an axis of rotation (0) and is rotated relative to a scanning device (11), in which arrangement the angle of rotation between the rotational solid (9) and the scanning device (11) is detected, in which the surface contour of the rotational solid (9) is scanned by the scanning device (11) and the distance of this surface contour from the axis of rotation (0) is measured and in which the angle of rotation and distance values measured are supplied to a digital computer (20) for determining the deviations from roundness the roundness being determined with consideration of the first-order errors caused by the eccentricity (e), characterised by the following steps of the method :

a) A digital incremental or absolute measuring probe is used as the scanning device (11) ;

b) The rotational solid (9) is visually roughly centred with respect to the axis of rotation (0) within the measuring range of the measuring probe (11) ;

c) During the determination of roundness the digital computer (20) takes into consideration apparent elliptical errors caused by the eccentricity (e) and, optionally, higher-order errors.

2. Method according to Claim 1, characterised by the following steps of the method :

a) The absolute radius (R) of the rotational solid (9) is entered into the digital computer (20) through an input unit (23) or the digital measuring probe (11) is calibrated by a preceeding calibration process in such a manner that the absolute value of the distance of the surface contour from the axis of rotation (0) is formed in the digital computer (20) ;

b) The parameters (e, $\alpha$ and, if necessary $R_0$) of a circle (K') which best matches the rotational solid of (9) are determined in accordance with known methods of compensation calculation by the digital computer (20) ;

c) The deviation from roundness (F) is calculated by the digital computer (20) as a function of a coordinate ($\varphi$) referred to the rotational solid and output.

3. Method according to Claim 1, characterised by the following steps of the method :

a) The absolute radius (R) of the rotational solid (9) is entered into the digital computer (20) through an input unit (23) or the digital measuring probe (11) is calibrated by a preceeding calibration process in such a manner that the absolute value of the distance of the surface contour from the axis of rotation (0) is formed in the digital computer (20) ;

b) The parameters (e, $\alpha$ and, if necessary $R_0$) of a circle (K') which best matches the rotational solid (9), are determined by the digital computer (20) in accordance with the following known simplified equations of compensation calculation :

$$x_0 = (2/n) \sum_n M_i \cos \psi_i \ ;$$

$$y_0 = (2/n) \sum_n M_i \sin \psi_i \ ;$$

$$e = \sqrt{x_0^2 - y_0^2} \ ;$$

$$\alpha = \arctan y_0/x_0 \ ;$$

where

$M_i$ represents the individual measured values of the scanning device (11),

n is the number of measured values $M_i$ over the angle $2\pi$,

$\psi_i$ are the angular positions, associated with the measured values $M_i$ with respect to the coordinate x of a system of coordinates x, y through the point of rotation (0),

$x_0$, $y_0$ are the coordinates of the centre (A) of the rotational solid (9),

$\alpha$ is the angle between the direction of eccentricity (e) and the co-ordinate x of the system of coordinates x, y and

$R_0$ is the radius of the best-fit circle (K') ;

c) The correction values of the apparent elliptical error are determined in accordance with the formula $F_2 = (e^2/4R_0) \cos 2 (\psi - \alpha)$ and are subtracted from the result of the measurement ;

d) The deviation from roundness $F_i$, is calculated by means of the digital computer (20) from the measured values $M_i$ by

$$F_i = M_i - M_0 - e \cos (\psi_i - \alpha) - (e^2/4 R_0) \cos 2(\psi_i - \alpha) \qquad \text{with}$$

$$M_0 = R_0 - (e^2/4 R_0) - E \qquad (E = \text{Correction Value})$$

and output as a function of the coordinate ($\varphi_i$) referred to the rotational solid.

4. Method according to Claims 2 and 3 characterised in that the digital computer (20) determines the concentricity of several rotational planes (9a, 9b, 9c) of the rotational solid (9) or the position of inclination of the axis of rotation of the rotational solid (9).

5. Method according to Claims 2 and 3, characterised in that the errors determined are subjected to a Fourier analysis and that the Fourier coefficients are output.


**Revendications**

1. Procédé de détermination des écarts de rotondité d'un corps de révolution (9) dans lequel on place ce dernier à une excentricité (e) déterminée de son axe central (A) par rapport à un axe de rotation (0) et le fait tourner relativement à un dispositif d'exploration (11) en détectant l'angle de rotation entre le corps de révolution (9) et le dispositif d'exploration (11), on palpe au moyen de ce même dispositif d'exploration (11) le profil de surface du corps de révolution (9) et mesure la distance de ce profil de surface à l'axe de rotation (0), puis on amène, pour la détermination des écarts de rotondité, les valeurs d'angle de rotation et de distance mesurées à un calculateur numérique (20), la détermination de la rotondité ayant lieu compte tenu des erreurs de premier ordre causées par l'excentricité (e), procédé caractérisé par les étapes suivantes :

a) on utilise comme dispositif d'exploration (11) un palpeur de mesure numérique incrémental ou absolu ;

b) on centre visuellement de façon grossière le corps de révolution (9) par rapport à l'axe de rotation (0) dans la zone de mesure du palpeur de mesure (11) ;

c) dans la détermination de la rotondité, on fait tenir compte par le calculateur numérique (20) de l'erreur elliptique apparemment causée par l'excentricité (e) et — facultativement — des erreurs d'ordre plus élevé.

2. Procédé selon la revendication 1, caractérisé par les étapes suivantes :

a) on introduit dans le calculateur numérique (20) le rayon absolu (R) du corps de révolution (9) par une unité d'entrée (23) ou étalonne par un processus préalable le palpeur de mesure numérique (11) en sorte que la valeur absolue de la distance du profil de surface à l'axe de rotation (0) soit formée dans ledit calculateur numérique (20) ;

b) le calculateur numérique (20) détermine par des méthodes connues du calcul de compensation les paramètres (e, $\alpha$ et le cas échéant $R_0$) d'un cercle (K') adapté pour le mieux au corps de révolution (9) ;

c) le calculateur numérique (20) calcule et délivre l'écart de rotondité (F) en tant que fonction d'une coordonnée ($\varphi$) rapportée au corps de révolution.

3. Procédé selon la revendication 1 caractérisé par les étapes suivantes :

a) on introduit le rayon absolu (R) du corps de révolution (9) dans le calculateur numérique (20) par une unité d'entrée (23) ou étalonne par un processus préalable le palpeur de mesure numérique (11) en sorte que la valeur absolue de la distance du profil de surface à l'axe de rotation (0) soit formée dans ledit calculateur numérique (20) ;

b) le calculateur numérique (20) détermine les paramètres (e, $\alpha$ et le cas échéant $R_0$) d'un cercle (K') adapté pour le mieux au corps de révolution (9) par les équations simplifiées suivantes, connues, du calcul de compensation :

$$x_0 = (2/n) \sum_n M_i \cos \psi_i \; ;$$

$$y_0 = (2/n) \sum_n M_i \sin \psi_i \; ,$$

$$e = \sqrt{x_0^2 + y_0^2} \; ;$$

$$\alpha = \text{arctg } y_0/x_0 \; ;$$

dans lesquelles :

$M_i$ désigne les diverses valeurs de mesure du dispositif d'exploration (11),

n le nombre des valeurs de mesure $M_i$ sur l'angle $2\pi$,

$\psi_i$ les positions angulaires affectées aux valeurs de mesure $M_i$ par rapport à la coordonnée x d'un système de coordonnées x, y issues du centre de rotation (0),

$x_0$, $y_0$ les coordonnées du centre (A) du corps de révolution (9),

$\alpha$ l'angle entre la direction de l'excentricité (e) et la coordonnée x du système de coordonnées x, y,

$R_0$ le rayon du cercle adapté pour le mieux (K') ;

c) on détermine par la formule $F_2 = (e^2/4 \; R_0) \cos 2 \; (\psi - \alpha)$ les valeurs de correction de l'erreur apparemment elliptique et les retranche du résultat de mesure ;

d) le calculateur numérique (20) calcule à partir des valeurs de mesure $M_i$ l'écart de rotondité $F_i$ par

$$F_i = M_i - M_0 - e \cos (\psi_i - \alpha) - (e^2/4 \; R_0) \cos 2(\psi_i - \alpha) \qquad \text{avec}$$

$$M_0 = R_0 - (e^2/4 \; R_0) + E \qquad (E = \text{valeur de correction}) \; ,$$

ledit écart $F_i$ étant délivré en tant que fonction de la coordonnée $(\psi_i)$ rapportée au corps de révolution.

4. Procédé selon les revendications 2 et 3 caractérisé par le fait que le calculateur numérique (20) détermine la concentricité de plusieurs surfaces de révolution (9a, 9b, 9c) du corps de révolution (9), ou la position oblique de l'axe de rotation du corps de révolution (9).

5. Procédé selon les revendications 2 et 3 caractérisé par le fait que l'on soumet les erreurs déterminées à une analyse de Fourier et délivre les coefficients de Fourier.

8

FIG. 1

FIG. 2

FIG.3

FIG. 4

FIG.5

FIG.6

FIG.7

0 068 082

4